# EUROPEAN PATENT SPECIFICATION

(11) **EP 3 904 980 B1**
(45) Date of publication and mention of the grant of the patent: **01.01.2025**
(21) Application number: 19901761.7
(22) Date of filing: 28.11.2019
(51) Int. Cl.: G05B 19/05, G05B 19/042

(54) **SUPPORT DEVICE, ASSISTANCE PROGRAM, AND CONTROL APPARATUS**
UNTERSTÜTZUNGSVORRICHTUNG, UNTERSTÜTZUNGSPROGRAMM UND STEUERUNGSEINRICHTUNG
DISPOSITIF DE SUPPORT, PROGRAMME D'ASSISTANCE ET APPAREIL DE COMMANDE

(30) Priority: 28.12.2018 JP 2018246641
(43) Date of publication of application: 03.11.2021
(73) Proprietor: OMRON Corporation, Shiokoji-dori, Shimogyo-ku, Kyoto-shi Kyoto 600-8530 (JP)
(72) Inventor: TAHARA, Yutaka, Kyoto-shi, Kyoto 600-8530 (JP)
(74) Representative: Becker, Eberhard
(86) International application number: PCT/JP2019/046604
(87) International publication number: WO 2020/137343

(56) References cited:
- WO-A1-2015/001594
- JP-A- 2014 119 909
- JP-A- 2015 187 860
- JP-A- 2018 173 883
- JP-A- H08 506 228
- US-B2- 10 097 585
- US-B2- 8 290 601

## Description

### BACKGROUND OF THE INVENTION

### 1. Field of the Invention

The invention relates to a support apparatus used in a controller system which controls a control target, an assistance program assisting in development of a user program executed by using a control apparatus included in a controller system, and a control apparatus executing a control arithmetic operation for controlling a control target.

### 2. Description of Related Art

In various manufacturing sites, control apparatuses such as programmable logic controllers (PLCs), etc., have been introduced. Such control apparatus is a computer and executes a control program designed in correspondence with a manufacturing apparatus or manufacturing equipment. The control apparatus is connected with various apparatuses in or outside a factory via a relay.

For example, Japanese Patent No. 6407494 (Patent Document 1) discloses a control apparatus communicably connected with a cloud system outside a factory via a router as an example of the relay.

In addition, PCT Publication No. 2016/157477 (Patent Document 2) discloses a control apparatus communicably connected with another control apparatus via a router as an example of the relay.

### [Prior Art Literature]

### [Patent Document(s)]

[Patent Document 1] Japanese Patent No. 6407494
[Patent Document 2] PCT Publication No. 2016/157477

Patent literature US 10097585 B2 relates to a model-based industrial security policy configuration system implementing a plant-wide industrial asset security policy in accordance with security policy definitions provided by a user. The configuration system models the collection of industrial assets for which diverse security policies are to be implemented. An interface allows the user to define security policies for a plant environment at a high-level by grouping the industrial assets into security zones, and defining any additional communication permissions in terms of asset-to-asset, asset-to-zone, or zone-to-zone conduits.

Patent literature US 8290601 B2 relates to a plant control system including at least one control apparatus, and an engineering apparatus for changing a security state of the control apparatus. The control apparatus includes: a security management part for accepting a security level change request downloaded from the engineering apparatus and changing a security level of the control apparatus by referring to a password held by the control apparatus; and a change permission part for permitting a change in the security level by the security management part.

### SUMMARY OF THE INVENTION

### [Problems to be solved by the invention]

Like the control apparatus disclosed in Patent Document 1, with the progress in information and communication technology (ICT) in recent years, control apparatuses are connected with various external apparatuses via a network. In addition, the processing executed in the control apparatus has become more sophisticated. With such networking or intelligentization, various security threats may occur to the control apparatus.

In the conventional control apparatus, no security events, including security threats that may occur through networking or intelligentization, is anticipated.

An objective of the invention is to solve the new issue of appropriately protecting a control apparatus and a controller system including the control apparatus against security events which may occur through the networking or the intelligentization of the control apparatus and the control system.

### [Means to solve problems]

The invention is set out in the appended set of claims. The following disclosure serves a better understanding of the present invention. According to the invention, a support apparatus is provided according to claim 1. The support apparatus includes: a forming/editing part, providing a first user interface for forming or editing a user program defining contents of a control arithmetic operation executed by the control apparatus which executes a control arithmetic operation for controlling a control target; and an output part outputting the user program formed via the first user interface provided by the forming/editing part. In the step of providing the first user interface, as an instruction constituting the user program, the forming/editing part provides a second user interface which receives a selection of a change instruction for changing a behavior of a security monitoring device, said changing a behavior being carried out by executing the security protection process in correspondence with one of security levels in accordance with at least one of action states of the control apparatus including a detection of a security event which is possible to occur in the control apparatus and including an execution of a process in correspondence with the security event. The second user interface includes a level corresponding region for associating an action state of the control apparatus with a respective security level, the level corresponding region includes a state displaying region in which the action state of the control apparatus is defined and a level input region in which the security level corresponding to the respective action state is received.

According to the disclosure, an environment capable of changing the behavior of the security monitoring device is provided. As a result, an environment for appropriately protecting the controller system against a security event which may occur is provided.

In the above disclosure, the forming/editing part provides a user interface receiving setting of an execution condition of the change instruction.

According to the disclosure, since the condition for changing the behavior of the security monitoring device can be changed, a security environment in correspondence with a situation in which a security event occurs can be provided.

In the above disclosure, the change instruction includes a change instruction for determining a value of an output signal indicating the behavior of the security monitoring device carried out by executing the security protection process with respect to an input signal indicating an action state of the control apparatus. In the case where the change instruction is selected, the forming/editing part provides a user interface receiving setting of a correspondence relationship between the input signal and the output signal.

According to the disclosure, an environment for taking security countermeasures in correspondence with the action state of the control apparatus is provided.

In the above disclosure, the forming/editing part provides a user interface for setting the behavior of the security monitoring device.

According to the disclosure, an environment for taking security countermeasures in correspondence with the action state of the control apparatus is provided.

In the above disclosure, the behavior of the security monitoring device includes setting of a connection condition for connecting the controller system with an outside network. The forming/editing part provides a user interface for setting contents of the connection condition.

According to the disclosure, since the connection for connection with an outside network can be set in correspondence with the action state of the control apparatus, a communication limitation can be applied according to the situation, and an environment for taking security countermeasures with flexibility is provided.

According to the invention, an assistance program is provided according to claim 6. The assistance program assists in development of the user program executed by the control apparatus which executes the control arithmetic operation for controlling the control target included in the controller system.

According to the disclosure, an environment capable of changing the behavior of the security monitoring device is provided. As a result, an environment for appropriately protecting the controller system against a security event which may occur is provided.

According to the invention, a control system is defined according to claim 7.

According to the disclosure, an environment capable of changing the behavior of the security monitoring device is provided. As a result, an environment for appropriately protecting the control apparatus against a security event that may occur is provided.

### [Inventive effects]

The control apparatus and the controller system including the control apparatus can be appropriately protected against a security event that may occur.

### BRIEF DESCRIPTION OF THE DRAWINGS

FIG. 1 is a diagram illustrating an example of a control system 10a centering on a controller system 1a.
FIG. 2 is a diagram illustrating a situation in which a security event with respect to a control apparatus 100a may occur.
FIG. 3 is a diagram illustrating an example of a functional configuration of a support apparatus and a controller system connected with the support apparatus.
FIG. 4 is a view illustrating an appearance of a configuration example of a controller system 1 according to an embodiment.
FIG. 5 is a schematic diagram illustrating a hardware configuration example of a control unit 100 constituting the controller system 1 according to an embodiment.
FIG. 6 is a schematic diagram illustrating a hardware configuration example of a security unit 200 constituting the controller system 1 according to an embodiment.
FIG. 7 is a schematic diagram illustrating a hardware configuration example of a safety unit 300 constituting the controller system 1 according to an embodiment.
FIG. 8 is a schematic diagram illustrating a software configuration of the controller system 1.
FIG. 9 is a functional configuration diagram schematically illustrating security functions of the controller system 1.
FIG. 10 is a diagram illustrating a data configuration of level corresponding data 864.
FIG. 11 is a diagram illustrating a data configuration of process content corresponding data 866.
FIG. 12 is a schematic diagram illustrating a hardware configuration example of a support apparatus 600.
FIG. 13 is a diagram illustrating an example of a user interface receiving selection of a change instruction.
FIG. 14 is a diagram illustrating an example of a user interface provided when a change instruction is selected.
FIG. 15 is a diagram illustrating an example of a user interface for setting contents of a connection condition for connection with an outside network.
FIG. 16 is a diagram illustrating an example of a user interface receiving setting of an execution condition of a change instruction.
FIG. 17 is a schematic diagram illustrating a software configuration of the support apparatus 600.
FIG. 18 is a flowchart illustrating an example of a security level switching process executed by the control unit 100.
FIG. 19 is a flowchart illustrating an example of a process executed by the support apparatus 600.

### DESCRIPTION OF THE EMBODIMENTS

Hereinafter, embodiments according to the invention will be described with reference to the drawings. In the following description, the same parts and components are designated by the same reference numerals. The names and functions thereof are also the same. Therefore, detailed descriptions thereof will not be repeated. In addition, each embodiment and each modification described below may be selectively combined as appropriate.

### 1. Application Example

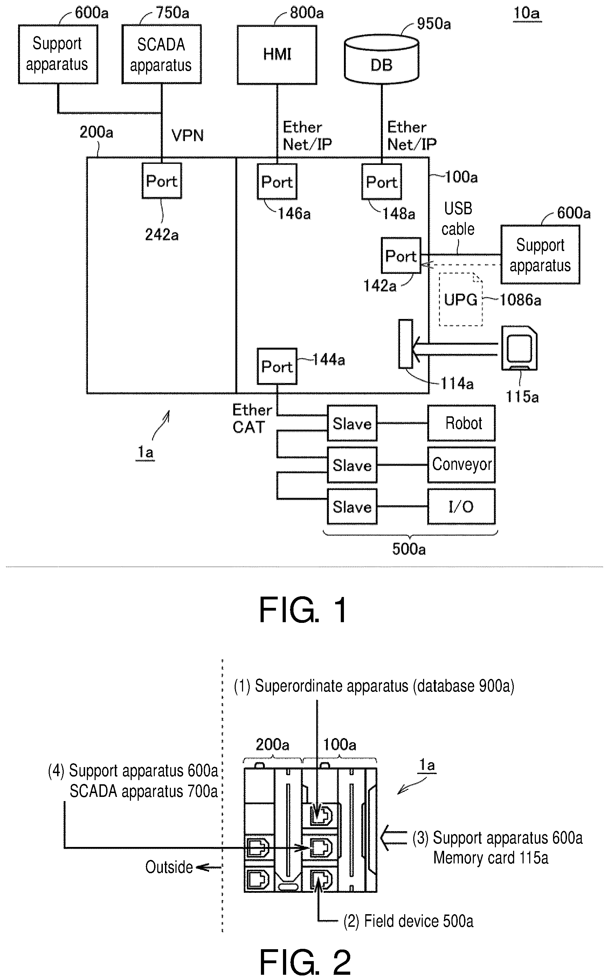

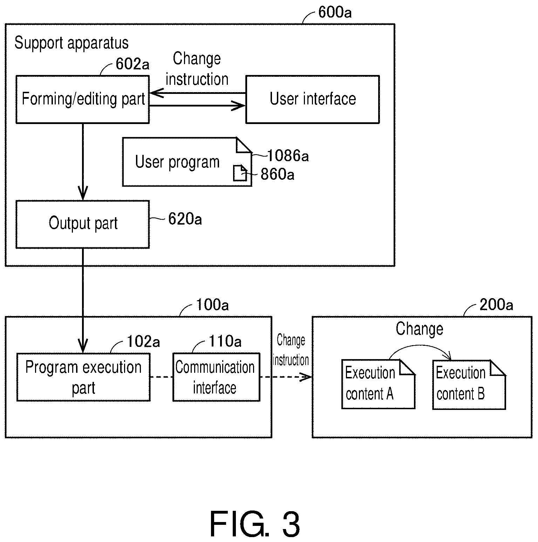

With reference to FIGs. 1 to 3, an example of the situation to which the invention is applied is described. FIG. 1 is a diagram illustrating an example of a control system 10a centering on a controller system 1a. FIG. 2 is a diagram illustrating a situation in which a security event with respect to a control apparatus 100a may occur. FIG. 3 is a diagram illustrating an example of a functional configuration of a support apparatus and a controller system connected with the support apparatus.

The controller system 1a includes the control apparatus 100a and the security monitoring device 200a. The control apparatus 100a and the security monitoring device 200a are communicably connected via any data transmission path, such as PCI Express or Ethernet (registered trademark).

The control apparatus 100a executes a control arithmetic operation for controlling a control target, and executes a core process in the controller system 1a. The control apparatus 100a has one or more communication ports. In the example shown in FIG. 1, the control apparatus 100a has communication ports 142a, 144a, 146a, and 148a.

The control apparatus 100a is communicably connected with a support apparatus 600a via the communication port 142a. The support apparatus 600a provides the user with functions, such as creating, debugging, and setting various parameters of programs executed by respective apparatuses included in the controller system 1a. A program created by the user by using the support apparatus 600a is referred to as a user program 1086a. The user program 1086a is transmitted from the support apparatus 600a to the control apparatus 100a, and is executed by the control apparatus 100a. The support apparatus 600a and the control apparatus 100a are typically connected by using a universal serial bus (USB) cable.

The user program 1086a may also be stored in a storage medium such as a memory card 115a. In the example shown in FIG. 1, the control apparatus 100a is provided with a memory card interface 114a and configured so that the memory card 115a is removable, and can read the user program 1086a stored in the memory card 115a.

The control apparatus 100a is communicably connected with a field device 500a via the communication port 144a. The field device 500a includes a sensor or a detector which collects various information required for the control arithmetic operation from the control target and an actuator which exerts a function with respect to the control target. Typically, EtherCAT (registered trademark) is used as the communication protocol between the field device 500a and the control apparatus 100a.

The control apparatus 100a is communicably connected with one or more human machine interfaces (HMIs) 800a via the communication port 146a. The HMI 800a notifies the operator with various information obtained from the control arithmetic operation in the controller system 1a and generates an internal command with respect to the controller system 1a in accordance with the operation from the operator. Typically, EtherNET/IP (registered trademark) is used as the communication protocol between the HMI 800a and the control apparatus 100a.

The control apparatus 100a is communicably connected with a database 950a via the communication port 148a. The database 950a collects various data (e.g., information relating to the traceability and measured from the work as the control target) transmitted from the controller system 1a. The database 950a may be communicably connected with the control apparatus 100a via an internal network, and may also be connected with the control apparatus 100a via a virtual private network (VPN). In the example shown in FIG. 1, EtherNet/IP (registered trademark) is used as the communication protocol between the database 950a and the control apparatus 100a.

The security monitoring device 200a is responsible for the security function with respect to the controller system 1a and executes a security protection process with respect to the controller system 1a. The security protection process will be described in greater detail in the following. The security monitoring device 200a has one or more communication ports. In the example shown in FIG. 1, the security monitoring device 200a has a communication port 242a.

The security monitoring device 200a is communicably connected with the support apparatus 600a or a supervisory control and data acquisition (SCADA) apparatus 750a. The communication between the security monitoring device 200a and the support apparatus 600a and the communication between the security monitoring device 200a and the SCAD apparatus 750a are typically performed by using a VPN.

The support apparatus 600a, for example, realizes remote maintenance of the controller system 1a through communicable connection with the security monitoring device 200a via the VPN.

The SCADA apparatus 750a notifies the operator with various information obtained from the control arithmetic operation in the controller system 1a and generates an internal command with respect to the controller system 1a in accordance with the operation from the operator. The SCADA apparatus 750 also has a function of collecting data handled by the controller system 1a.

Referring to FIG. 2, the situation in which a security event with respect to the control apparatus 100a may occur is described. Here, a "security event" covers any event which obstructs the normal operation of the equipment or machine included in the control system 10a as well as an event which may be related to such event.

In addition, "normal operation" also covers an ancillary process, such as the start-up, maintenance, and setup changes of the equipment or machine in order for the equipment or machine to continue operating according to the system design and the production plan.

In the control apparatus 100a, typically, there is a risk that a security event may occur in: (1) the communication with a superordinate apparatus such as the database 950a, (2) the communication with the control target, such as the field device 500a, (3) the communication with an apparatus which exerts a change to the control program executed by the control apparatus 100a, or (4) the communication with an external apparatus. In addition, all the physical ports provided in the control apparatus 100a bear a risk that a security event may occur. Here, the concept of the control program includes, in addition to the user program 1086a, a system program providing basic functions as the control apparatus 100a.

The security monitoring device 200a executes the security protection process, including processes of detecting a security event which may occur in the controller system 1a and responding to a security event, in various situations. The process for responding to a security event includes a process related to at least one of preventing a security event which may occur in the controller system 1a and coping with a detected security event.

The user program 1086a executed by the control apparatus 100a includes a change instruction 860a for changing the behavior of the security monitoring device 200a carried out by executing the security protection process. By executing the change instruction 860a, at least one of the prevention with respect to the security event and the coping with respect to the detected security event executed by the security monitoring device 200a can be changed.

The support apparatus 600a provides a user interface for selecting the change instruction 860a in the formation of the user program 1086a. The user interface is realized by using a display part, such as a display, and an input part, such as a mouse and a keyboard, included in the support apparatus 600a.

Referring to FIG. 3, the support apparatus includes a forming/editing part 602a for providing a user interface for forming or editing a user program and an output part 620a outputting the user program formed via the user interface provided by the forming/editing part.

Here, the user program 1086a output by the support apparatus 600a may be a program written in object codes after compilation, and may also be a program written in source codes before compilation.

The forming/editing part 602a, for example, is a function expressed by executing various programs by a processor included in the support apparatus 600a.

The output part 620a may be a USB controller for directly outputting the user program 1086a to the control apparatus 100a, and may also be a memory card interface for outputting the user program 1086a to the memory card 115a, and may also be an interface for communicable connection with another apparatus (e.g., the security monitoring device 200a) communicably connected with the control apparatus 100a.

The control apparatus 100a includes a program execution part 102a executing a user program and a communication interface 110a for connection with the security monitoring device 200a.

When executing the user program including the change instruction formed via the user interface provided by the support apparatus 600a, the program execution part 102a notifies the security monitoring device 200a with an instruction for changing the contents of the security protection process executed by the security monitoring device 200a. The program execution part 102a is a function expressed by executing a system program by a processor included in the control apparatus 100a.

The security monitoring device 200a receives the instruction from the control apparatus 100a to change the contents of the security protection process. For example, in the case shown in FIG. 3, the security monitoring device 200a changes the contents of the security protection process from an execution content A to an execution content B.

Accordingly, with the support apparatus 600a providing a user interface capable of selecting the change instruction, an environment capable of changing the behavior of the security monitoring device 200a is provided. As a result, an environment for appropriately protecting the controller system against a security event which may occur is provided.

### 2. Configuration Example

### <A. System configuration of controller system 1>

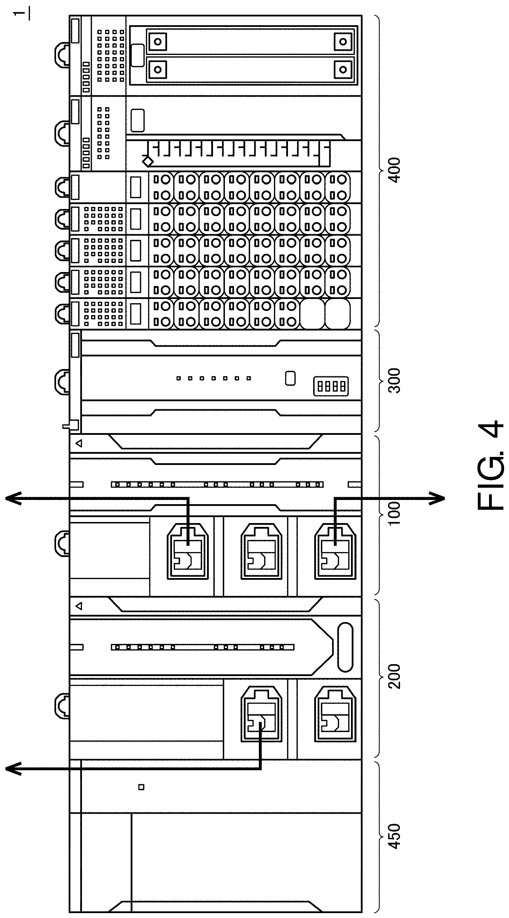

FIG. 4 is a view illustrating an appearance of a configuration example of the controller system 1 according to an embodiment. The controller system 1 includes a control unit 100, a security unit 200, a safety unit 300, one or more function units 400, and a power unit 450.

The control unit 100 and the security unit 200 are connected via any data transmission path, such as PCI Express or Ethernet (registered trademark). The control unit 100 and the safety unit 300 as well as the one or more function units 400 are connected via an internal bus not shown herein.

The control unit 100 is an example of the control apparatus performing the control arithmetic operation for controlling the control target, and executes a core process in the controller system 1. The control unit 100 executes the control arithmetic operation for controlling the control target in accordance with arbitrarily designed requirements. Relative to the control arithmetic operation executed by the safety unit 300 described in the following, the control arithmetic operation executed by the control unit 100 is referred to as "standard control". In the configuration shown in FIG. 4, the control unit 100 has one or more communication ports.

The security unit 200 is connected with the control unit 100, and is responsible for the security function with respect to the controller system 1. The security unit 200 is an example of the security monitoring device executing the security protection process. In the configuration shown in FIG. 4, the security unit 200 has one or more communication ports. The security function provided by the security unit 200 will be described in detail in the following.

The safety unit 300 is independent from the control unit 100, and executes the control arithmetic operation for realizing the safety function related to the control target. The control arithmetic operation executed by the safety unit 300 is referred to as "safety control". Normally, "safety control" is designed to meet the requirements for realizing the safety functions defined in IEC 61508. "Safety control" is a general term for processes for preventing human safety from being threatened by equipment or machines.

The function units 400 provide various functions for realizing the control with respect to various control targets by the controller system 1. The function units 400 may typically include an I/O unit, a safety I/O unit, a communication unit, a motion controller unit, a temperature adjustment unit, a pulse counter unit, etc. Examples of the I/O unit include a digital input (DI) unit, a digital output (DO) unit, an analog output unit (AI), an analog output (AO) unit, a pulse catch input unit, and a composite unit in which multiple types are mixed. The safety I/O unit handles an I/O process related to safety control.

The power unit 450 supplies power at a preset voltage to the respective units forming the controller system 1.

### <B. Hardware configuration example of respective units>

In the following, the hardware configuration example of the respective units forming the controller system 1 will be described according to the embodiment.

### <b1: Control unit 100>

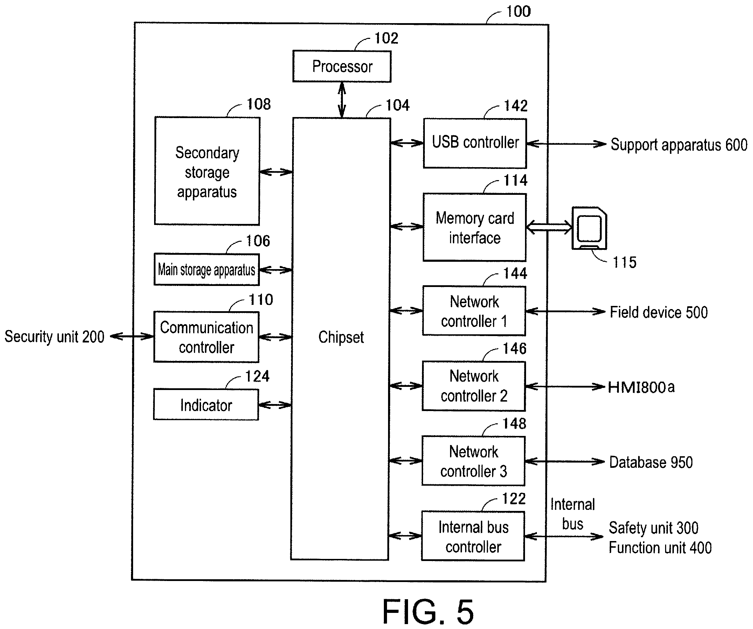

FIG. 5 is a schematic diagram illustrating a hardware configuration example of the control unit 100 constituting the controller system 1 according to an embodiment. The control unit 100 includes, as main components, a processor 102 such as a central processing unit (CPU) or a graphical processing unit (GPU), a chipset 104, a main storage apparatus 106, a secondary storage apparatus 108, a communication controller 110, a universal serial bus (USB) controller 142, a memory card interface 114, network controllers 144, 146, and 148, an internal bus controller 122, and an indicator 124.

By reading various programs stored in the secondary storage apparatus 108 and expanding the programs in the main storage apparatus 106, the processor 102 realizes the control arithmetic operation relating to the standard control as well as various processes to be described in the following. That is, the processor 102 has the function as a program execution part that executes a program. By mediating the data exchange among the processor 102 and the respective components, the chipset 104 realizes the processes of the control unit 100 as a whole.

In addition to the system program, the secondary storage apparatus 108 stores a control program that operates in the execution environment provided by the system program.

The communication controller 110 handles the data exchange with the security unit 200. As the communication controller 110, a communication chip compatible with PCI Express or Ethernet can be adopted, for example.

The USB controller 142 is equivalent to a communication port and handles the data exchange with an arbitrary information processing apparatus via USB connection. Specifically, the USB controller 142 handles the data exchange with a support apparatus 600. The support apparatus 600 is at least able to access the control unit 100 and provides the user with functions, such as creating, debugging, and setting various parameters of programs executed by respective units included in the controller system 1a.

The memory card interface 114 is configured so that a memory card 115 is removable, and is capable of writing data of the control program or the respective settings to the memory card 115, or capable of reading data of the control program or the respective settings from the memory card 115.

The network controller 144 handles the data exchange with one or more field devices 500. The field device 500 includes a sensor or a detector which collects various information required for the control arithmetic operation from the control target and an actuator which exerts a function with respect to the control target. The field device 500 includes a robot that exerts an external function with respect to the work, a conveyor that conveys the work, and an I/O unit that exchanges signals with a sensor or an actuator provided in the field.

The network controller 146 handles the data exchange with an HMI 800a. The HMI 800a notifies the operator with various information obtained from the control arithmetic operation in the controller system 1 and generates an internal command, etc., with respect to the controller system 1 in accordance with the operation from the operator.

The network controller 148 handles the data exchange with a database 950. The database 950 collects various data (e.g., information relating to the traceability measured from each work) transmitted from the controller system 1.

Each of the network controllers 144, 146, and 148 is equivalent to a communication port, and may adopt an industrial network protocol, such as EtherCAT (registered trademark), Ethernet/IP (registered trademark), DeviceNet (registered trademark), CompoNet (registered trademark), etc.

The internal bus controller 122 handles the data exchange with the safety unit 300 forming the controller system 1 or the one or more function units 400. In the internal bus, a communication protocol inherently provided by the manufacturer may be used, or a communication protocol same as or compliant with an industrial network protocol may be adopted.

The indicator 124 notifies the action state, etc., of the control unit 100, and is configured as one or more LEDs provided on the unit surface.

In FIG. 5, while a configuration example in which required functions are provided by the processor 102 executing the programs, some or all of the provided functions may also be implemented by using a dedicated hardware circuit (e.g., an application specific integrated circuit (ASIC), or a field-programmable gate array (FPGA), etc.,). Alternatively, the main parts of the control unit 100 may be realized by using hardware (e.g., an industrial personal computer based on a general-purpose personal computer) following a general-purpose architecture. In such case, by using virtualization technology, multiple operating systems (OSs) with different purposes may be executed in parallel, and required applications may be executed in the respective OSs.

### <b2: Security unit 200>

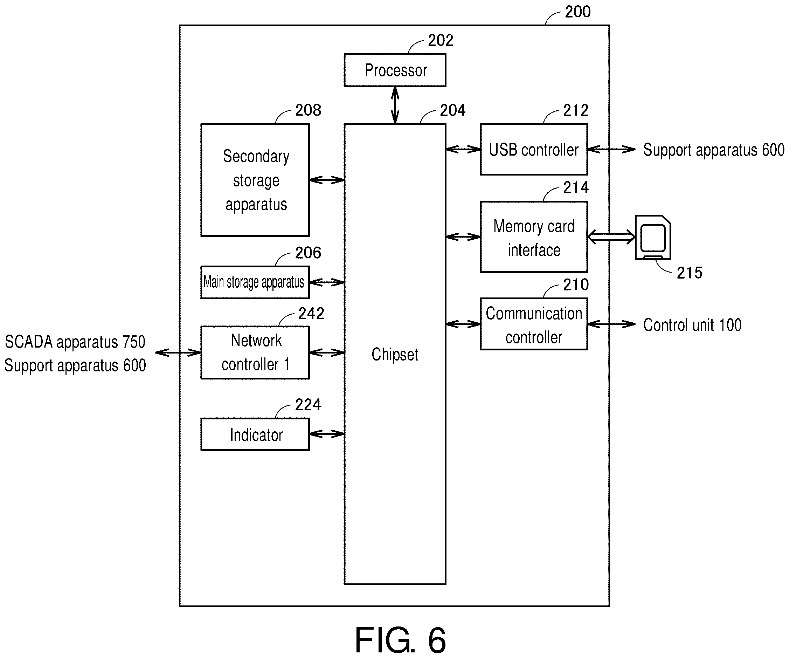

FIG. 6 is a schematic diagram illustrating a hardware configuration example of the security unit 200 constituting the controller system 1 according to an embodiment. The security unit 200 includes, as main components, a processor 202 such as a CPU or a GPU, a chipset 204, a main storage apparatus 206, a secondary storage apparatus 208, a communication controller 210, a USB controller 212, a memory card interface 214, a network controller 242, and an indicator 224.

By reading various programs stored in the secondary storage apparatus 208 and expanding the programs in the main memory apparatus 206, the processor 202 realizes various security functions to be described in the following. By mediating the data exchange among the processor 202 and the respective components, the chipset 204 realizes the processes of the security unit 200 as a whole.

In addition to the system program, the secondary storage apparatus 208 also stores the security system program that operates in the execution environment provided by the system program.

The communication controller 210 handles the data exchange with the control unit 100. As the communication controller 210, like the communication controller 210 in the control unit 100, a communication chip compatible with PCI Express or Ethernet can be adopted, for example.

The USB controller 212 handles the data exchange with an arbitrary information processing apparatus via USB connection. Typically, the USB controller 212 handles the data exchange with the support apparatus 600.

The memory card interface 214 is configured so that a memory card 215 is removable, and is capable of writing data of the control program or the respective settings to the memory card 215, or capable of reading data of the control program or the respective settings from the memory card 215.

The network controller 242 handles the data exchange with an arbitrary apparatus via a network. The network controller 242 may adopt a general-purpose network protocol, such as the Ethernet (registered trademark). Via the network, for example, the support apparatus 600 and the SCADA apparatus 750 may be connected.

The SCADA apparatus 750 notifies the operator with various information obtained from the control arithmetic operation in the controller system 1 and generates an internal command, etc., with respect to the controller system 1 in accordance with the operation from the operator. The SCADA apparatus 750 has a function of collecting data handled by the controller system 1.

The indicator 224 notifies the action state, etc., of the security unit 200, and is configured as one or more LEDs provided on the unit surface.

In FIG. 6, while a configuration example in which required functions are provided by the processor 202 executing the programs, some or all of the provided functions may also be implemented by using a dedicated hardware circuit (e.g., ASIC or FPGA). Alternatively, the main parts of the security unit 200 may be realized by using hardware (e.g., an industrial personal computer based on a general-purpose personal computer) following a general-purpose architecture. In such case, by using virtualization technology, multiple OSs with different purposes may be executed in parallel, and required applications may be executed in the respective OSs.

### <b3: Safety unit 300>

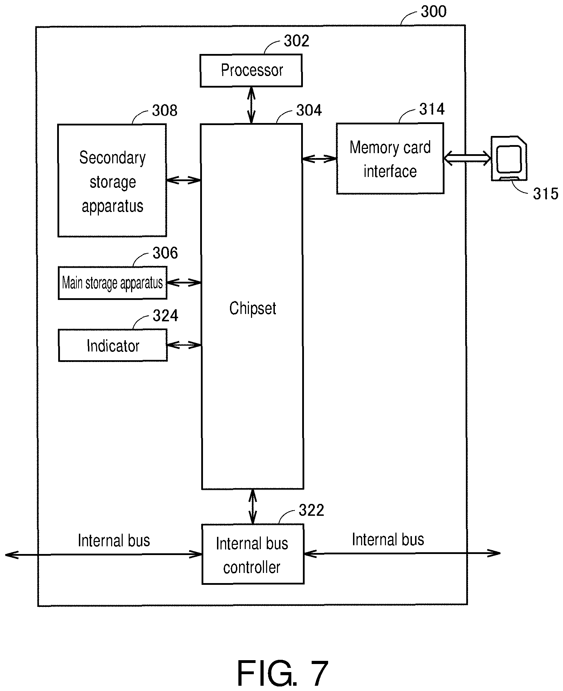

FIG. 7 is a schematic diagram illustrating a hardware configuration example of the safety unit 300 constituting the controller system 1 according to an embodiment. The safety unit 300 includes, as main components, a processor 302 such as a CPU or a GPU, a chipset 304, a main storage apparatus 306, a secondary storage apparatus 308, a memory card interface 314, an internal bus controller 322, and an indicator 324.

By reading various programs stored in the secondary storage apparatus 308 and expanding the programs in the main memory apparatus 306, the processor 302 realizes the control arithmetic operation relating to safety control as well as various processes to be described in the following. By mediating the data exchange among the processor 302 and the respective components, the chipset 304 realizes the processes of the safety unit 300 as a whole.

In addition to the system program, the secondary storage apparatus 308 stores the safety program that operates in the execution environment provided by the system program.

The memory card interface 314 is configured so that a memory card 315 is removable, and is capable of writing data of the safety program or the respective settings to the memory card 315, or capable of reading data of the safety program or the respective settings from the memory card 315.

The internal bus controller 322 handles the data exchange with the control unit 100 via an internal bus.

The indicator 324 notifies the action state, etc., of the safety unit 300, and is configured as one or more LEDs provided on the unit surface.

In FIG. 7, while a configuration example in which required functions are provided by the processor 302 executing the programs, some or all of the provided functions may also be implemented by using a dedicated hardware circuit (e.g., ASIC or FPGA). Alternatively, the main parts of the safety unit 300 may be realized by using hardware (e.g., an industrial personal computer based on a general-purpose personal computer) following a general-purpose architecture. In such case, by using virtualization technology, multiple OSs with different purposes may be executed in parallel, and required applications may be executed in the respective OSs.

### <C. Software configuration of controller system 1>

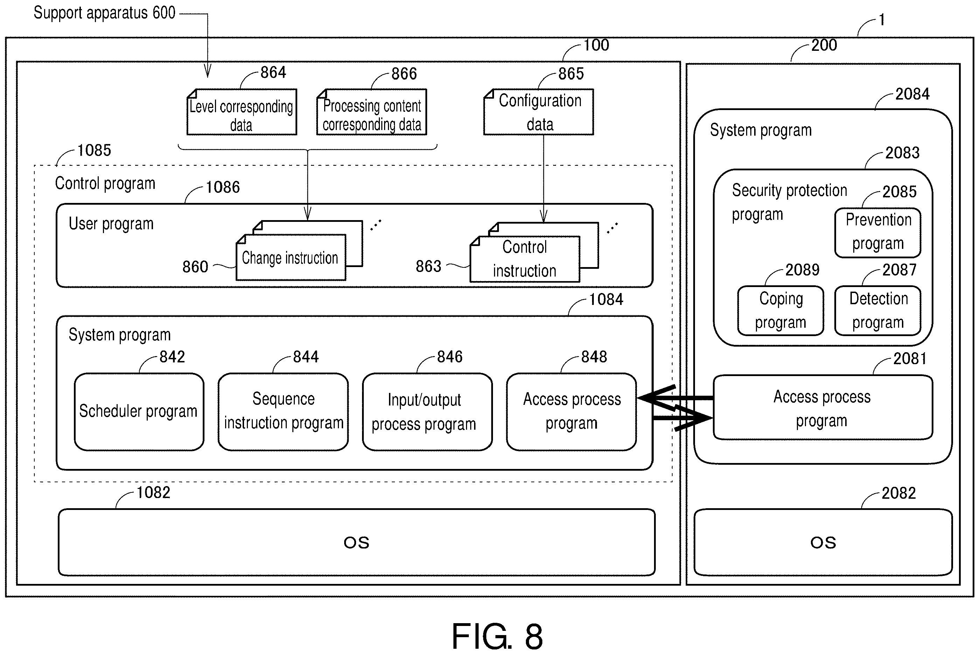

FIG. 8 is a schematic diagram illustrating a software configuration of the controller system 1. In FIG. 8, the descriptions about the safety unit 300, the function units 400, and the power unit 450 are omitted. The instruction codes included in the software group of the control unit 100 shown in FIG. 8 are stored in the secondary storage apparatus 108, read at a suitable timing, and executed by the processor 102. The instruction codes included in the software group of the security unit 200 shown in FIG. 8 are stored in the secondary storage apparatus 208, read at a suitable timing, and executed by the processor 202.

The software executed by the control unit 100, in general, includes an OS 1082, a system program 1084, and a user program 1086. The system program 1084 and the user program 1086 are generally referred to as a control program 1085.

The OS 1082 is designed in correspondence with the computer architecture of the control unit 100, and provides the basic execution environment for the processor 102 to execute the system program 1084 and the user program 1086. The OS 1082 is typically provided by the manufacturer of the controller or a professional software company.

The system program 1084 is a software group for providing functions as the controller system 1. Specifically, the system program 1084 includes a scheduler program 842, a sequence instruction program 844, an input/output program 846, and an access process program 848. Each program included in the system program 1084 is typically provided by the manufacturer of the controller or a professional software company.

The user program 1086 is formed in correspondence with the control purpose of the user. The user program 1086 is formed, for example, in the support apparatus 600. The user program 1086 is transferred from the support apparatus 600 to the control unit 100 via the USB cable, and is stored in the secondary storage apparatus 108.

The user program 1086 realizes the control purpose of the user through cooperating with a sequence instruction program 844. That is, the user program 1086 realizes a programmed action by using the instructions, functions, functional modules provided by the sequence instruction program 844.

The user program 1086 includes one or more change instructions 860. The change instruction is an instruction for changing the contents of the security protection processes executed by the security unit 200. While not shown in FIG. 8, the change instruction 860 includes a first change instruction and a second change instruction. The first change instruction is an instruction for determining the value of the output signal indicating the behavior of the security unit 200 carried out by executing the security protection process with respect to the input signal indicating the action state of the control unit 100. The second change instruction is an instruction indicating the behavior of the security unit 200.

The level corresponding data 864 and the process content corresponding data 866, as the information indicating parameters for executing the change instruction, are sent from the support apparatus 600 in correspondence with the user program 1086. Details about the level corresponding data 864 and the process content corresponding data 866 will be described in detail in the following.

The user program 1086 includes a control instruction 863 for controlling the field device 500, etc., other than the change instruction. Configuration data 865, as the information indicating the parameter for executing the control instruction, is sent from the support apparatus 600 in correspondence with the user program 1086. Details of the configuration data 865 will be described in the following.

The scheduler program 842 makes the processor 102 execute programs in accordance with predetermined priority. The scheduler program 682 controls the start and the interruption of a process as well as the resumption of a process after the process is interrupted for each program executed by the processor 102.

The sequence instruction program 844 includes an instruction code group for calling an entity of the sequence instruction specified in the user program 1086 when the user program 1086 is executed and realizing the contents of the instruction.

The input/output process program 846 is a program for managing the acquisition of input data and the transmission of output data between field devices connected with the control unit 100.

The access process program 848 includes an instruction code group for realizing the process of communicating with another apparatus such as the security unit 200. More specifically, by executing the access process program 848, the control unit 100 outputs the output signal indicating the behavior of the security unit 200 carried out by executing the security protection process and determined when the change instruction is executed to the security unit 200 through the execution of the access process program 848.

The security unit 200, in general, includes an OS 2082 and a system program 2084.

The OS 2082 is designed in correspondence with the computer architecture of the security unit 200, and provides the basic execution environment for the processor 202 to execute the system program 2084. The OS 2082 is typically provided by the manufacturer of the controller or a professional software company.

The system program 2084 includes an access process program 2081 and a security protection program 2083.

The access process program 2081 includes an instruction code group for realizing the process of communicating with another apparatus such as the control unit 100.

The security protection program 2083 includes a prevention program 2085, a detection program 2087, and a coping program 2089. The security protection program 2083 includes an instruction code group for executing each of the prevention program 2085, the detection program 2087, and the coping program 2089 in accordance with the output signal indicating the behavior of the security unit 200, transmitted from the control unit 100, and obtained through the execution of the access process program 2081.

The security unit 200 executes each program included in the security protection program 2083 in accordance with the output signal indicating the behavior of the security unit 200 and output from the control unit 100.

### <D. Security protection process executed by the security unit 200>

The security unit 200 is responsible for the security function with respect to the controller system 1 and executes the security protection process with respect to the controller system 1. For the control unit 100, a security event may occur in various situations (as shown in FIG. 2). The security unit 200 executes the security protection process, including the prevention with respect to the security event that may occur in the control unit 100, the detection of the security event, and coping with the detected security event, in the respective situations.

The security unit 200 is capable of executing security protection processes respectively corresponding to multiple predetermined security levels. In addition, the security protection process is executed in correspondence with one of the security levels in accordance with at least one of the action state of the control unit 100 and the notification issued by the control arithmetic operation executed by the control unit 100.

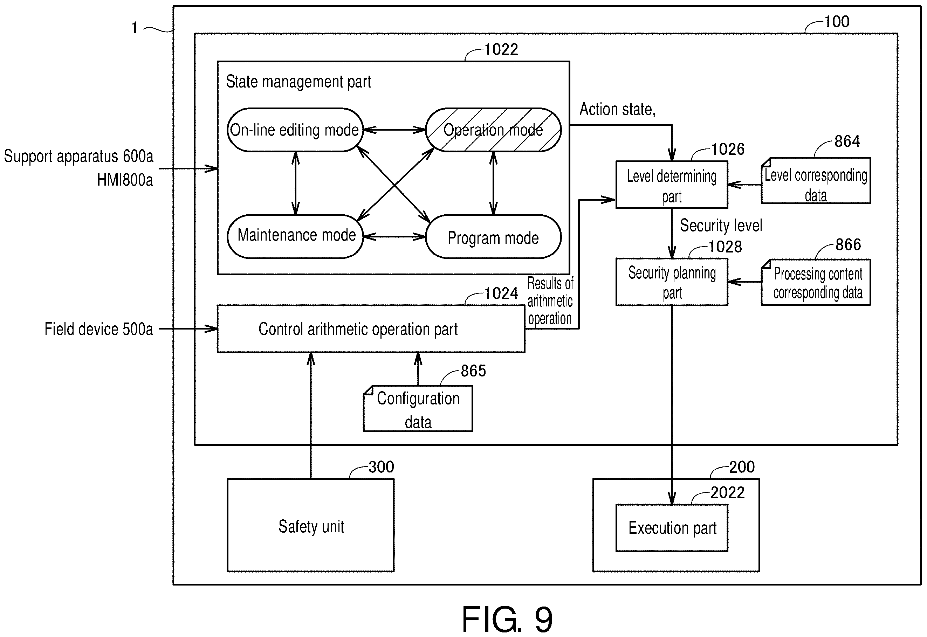

FIG. 9 is a functional configuration diagram schematically illustrating security functions of the controller system 1. The functions of the control unit 100 shown in FIG. 9 are realized by executing the respective programs shown in FIG. 8 by the processor 102. In addition, the functions of the security unit 200 shown in FIG. 9 are realized by executing the respective programs shown in FIG. 8 by the processor 202.

The control unit 100 includes a state management part 1022, a control arithmetic operation part 1024, a level determining part 1026, and a security planning part 1028.

The state management part 1022 manages the action state of the control unit 100. The action states are states controlled through execution of the system program 1084 which is installed in advance in the control unit 100 and provides functions as the control unit 100. That is, the action states of the control unit 100 are states defined by the manufacturer of the control unit 100. In addition, the state management part 1022 may also be considered as functions expressed by executing the system program 1084.

Typically, the action states of the control unit 100 can be classified into a state in which the control program provided in the control unit 100 is executed and a state in which the control program is not executed, or a state in which rewriting of the control program is permitted and a state in which the rewriting is not permitted.

In the embodiment, control is exerted in one of the four action states, i.e., the "program mode", the "operation mode", the "on-line editing mode", and the "maintenance mode".

The "program mode" is an action state controlled during a period before the user program 1086 is installed to the control unit 100 until the installation is completed and the control unit does not execute a program. For example, the "program mode" is an action state when the control unit 100 is shipped or an action state controlled when the control program of the control unit 100 is rewritten.

The "operation mode" is an action state controlled when the control unit 100 is executing a program, and is a mode controlled when equipment or a machine is in operation.

The "on-line edit mode" is an action state able to rewrite the control program during execution of the control program.

The "maintenance mode" is an action state in which the control unit 100 does not execute a program, and the program of the control unit 100 is able to be rewritten.

As an example of these action states, the types of the action states which the control unit 100 controls may include fewer than four types, one type, and five or more types. In addition, it is not required that the control unit 100 necessarily includes the action states shown in FIG. 9.

The statement management part 1022 controls the action state in correspondence with the met condition of switching the action state when the condition is met. The statement management part 1022 notifies the level determining part 1026 that the action state is switched. The state management part 1022, for example, typically switches the action state in the case of detecting a command of switching the state from the support apparatus 600, an internal command generated in the HMI 800a, or an operation with respect to a key switch (not shown) provided in the control unit 100.

The control arithmetic operation part 1024 performs the control arithmetic operation for controlling the work as the control target. The control arithmetic operation part 1024 executes the control arithmetic operation in accordance with the configuration data 865 and the input value output from the field device 500 or the safety unit 300 communicably connected with the control unit 100.

The configuration data 865 includes the setting information required for executing the control arithmetic operation, such as including the assignment of variables used in the program with respect to the signal assigned to the I/O unit.

The level determining part 1026 determines a security level in accordance with the input value from the state management part 1022 or the control arithmetic operation part 1025 and the level corresponding data 864. The level determining part 1026 notifies the security planning part 1028 about the determined security level.

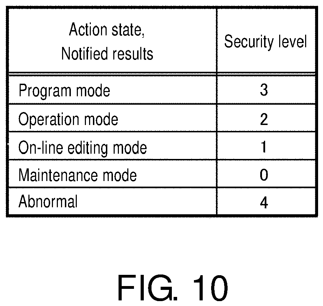

FIG. 10 is a diagram illustrating a data configuration of the level corresponding data 864. Referring to FIG. 10, the level corresponding data 864 includes the assignment of the security level to the input value input from the statement management part 1022 and the control arithmetic operation part 1024. More specifically, the security level is assigned with respect to the action state or a variable indicating the arithmetic operation result. Examples of the arithmetic operation result include, for example, the output of an abnormal signal.

Referring to FIG. 9 again, the security planning part 1028 specifies the contents of the security protection process whose contents correspond to the security level, and instructs the security unit 200 to execute the security protection process with the specified contents. The security planning part 1028 specifies the contents of the security protection process in accordance with the security level notified from the level determining part 1026 and the process content corresponding data 866.

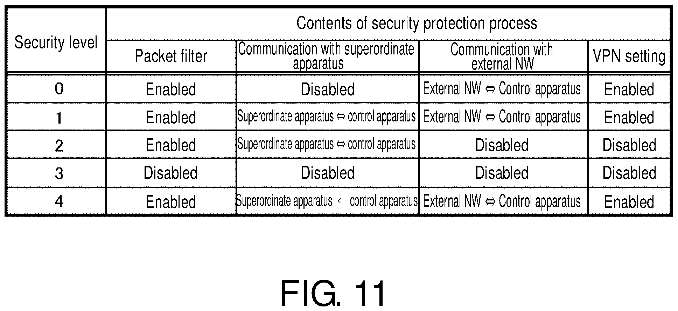

FIG. 11 is a diagram illustrating a data configuration of the process content corresponding data 866. Referring to FIG. 11, the contents of the security protection process are defined in correspondence with each of multiple predetermined security levels.

For example, as shown in FIG. 11, the process content corresponding data 866 defines, for each security level, the information whose output is limited and the output destination which is limited among the information output from the control unit 110, and the information whose input is limited and the target able to transmit information to the control unit 100 among the information input from an apparatus connected to the control unit 100, as the prevention means against the security event.

Also, the process content corresponding data 866 may also define, for each security level, a threshold at which and a detection target for which a security event is determined as occurring, as a detection means of the security event.

In addition, the process content corresponding data 866 may also define, for each security level, among the information output from the control unit 100, the information whose output is limited, the output destination which is limited, the information input to the limited control unit 110, and the target able to transmit information to the control unit 100, in the case in which the security event is detected, as a coping means in correspondence with the detected security event. In addition, the processing content corresponding data 866 may also define, for each security level, a means for notifying a security event in the case where the security event occurs.

The security unit 200 has an execution part 2022. The execution part 2022 executes the security protection process with the contents specified by the security planning part 1028. Specifically, the execution part 2022 carries out the protection against the security event by using the prevention means that is defined, detects the security event by using the detection means that is defined, and copes with the detected security event by using the coping means that is defined.

For example, in the embodiment, the security unit 200 exhibits the following behaviors in correspondence with the action states of the control unit 100. In the "operation mode" in which the control program is executed, a security level 2 is set, and the communication with a superordinate apparatus, such as the database 950 is set to be enabled. Accordingly, the operation logs collected when the program is executed can be uploaded to the database 950 at all times. At this time, to lower the risk of leaking the information in operation to the outside, the communication via VPN is disabled.

In addition, in the "program mode" in which the rewriting of the control program of the control unit 100 is permitted, the communication with the superordinate apparatus, such as the database 950, and the communication via the VPN are both disabled. Accordingly, the control program can be prevented from being rewritten unintentionally.

In addition, in the case in which the result of the control arithmetic operation indicate an abnormality, by enabling the communication via VPN, an environment capable of remote maintenance is provided.

Here, the series of processes of changing the behavior of the security unit 200 when the security protection process is executed in accordance with the input value from the state management part 1022 are realized by executing the first change instruction to be described afterwards. Meanwhile, the series of processes of changing the behavior of the security unit 200 when the security protection process is executed in accordance with the input value from the control arithmetic operation part 1024 are realized by executing the second change instruction to be described afterwards.

### <E. Hardware configuration example of support apparatus>

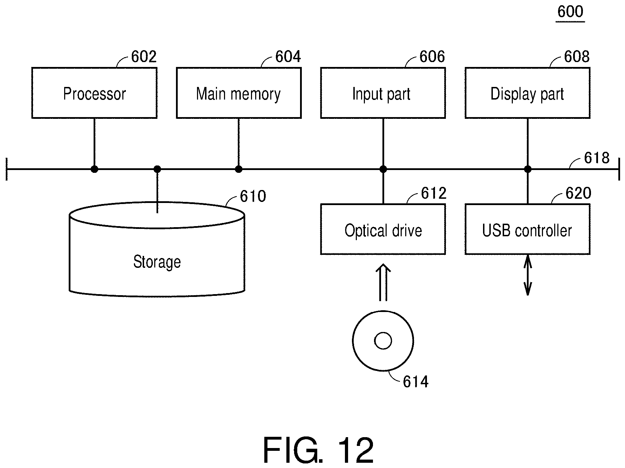

FIG. 12 is a schematic diagram illustrating a hardware configuration example of the support apparatus 600. The support apparatus 600 provides the function of forming the user program including the change instruction. More specifically, the support apparatus 600 provides the user interface for selecting the change instruction. As an example, the support apparatus 600 is realized by using hardware (e.g., a general-purpose personal computer) following a general-purpose architecture.

Referring to FIG. 12, the support apparatus 600 includes a processor 602, a main memory 604, an input part 606, a display part 608, a storage 610, an optical drive 612, and a USB controller 620. These components are connected via a processor bus 618.

The processor 602 is configured by a CPU or a GPU, etc., provides the user interface for selecting the change instruction by reading the program stored in the storage 610 and expanding the program in the main memory 604, and forming the user program 1086 in accordance with the operation by the user.

The main memory 604 is configured by a volatile storage apparatus, such as a DRAM or a SRAM. The storage 610 is configured by a non-volatile storage apparatus, such as an HDD or an SSD.

In addition to the OS for realizing basic functions, the storage 610 stores the support program for providing functions as the support apparatus 600.

The input part 606 is configured by a keyboard or a house, etc., and receives a user operation. The display part 608 is configured by a display, etc., and outputs processing results from the processor 602.

The USB controller 620 exchanges data with the controller system 1, etc., via USB connection.

The support apparatus 600 has the optical drive 612, and reads a program stored non-transiently in a computer-readable recording medium 614 (e.g., an optical recording medium such as a digital versatile disc (DVD)) from the computer-readable recording medium 614 to install the computer-readable recording medium 614 in the storage 610, etc.

A support program 6140, etc., executed by the support apparatus 600 may also be installed via the computer readable recording medium 614, and may also be installed by being downloaded from a sever apparatus on the network, etc. In addition, the functions provided by the support apparatus 600 according to the embodiment may also be realized by using a portion of the module provided by the OS.

While a configuration example in which required functions as the support apparatus 600 are provided by the processor 602 executing the program in FIG. 12, some or all of the provided functions may also be implemented by using a dedicated hardware circuit (e.g., ASIC or FPGA).

### <F. User interface provided by the support apparatus 600>

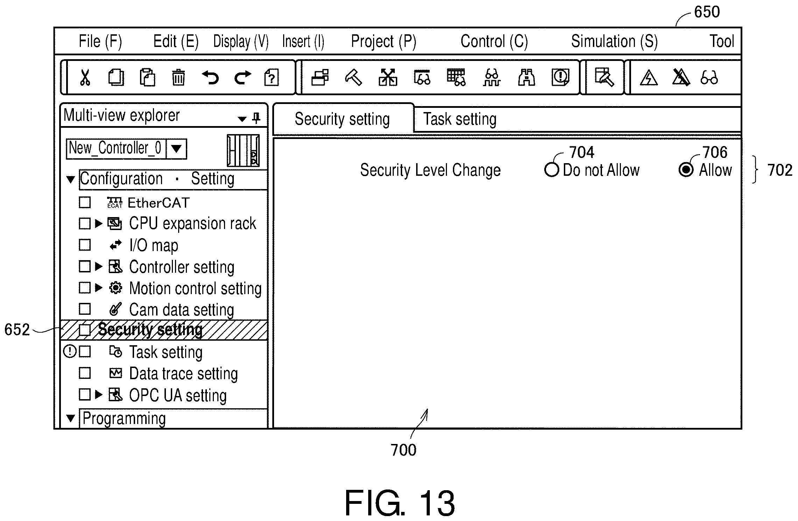

The support apparatus 600 provides a user interface for the user to form the user program 1086 including the change instruction. More specifically, with the processor 602 of the support apparatus 600 executing the program stored in the storage 610, the user interface shown in FIGs. 13 to 16 is displayed on the display part 608, and the user program 1086 including the change instruction in accordance with the setting received by the input part 606 as well as the level corresponding data 864 and the processing content corresponding data 866 required for executing the change instruction are generated.

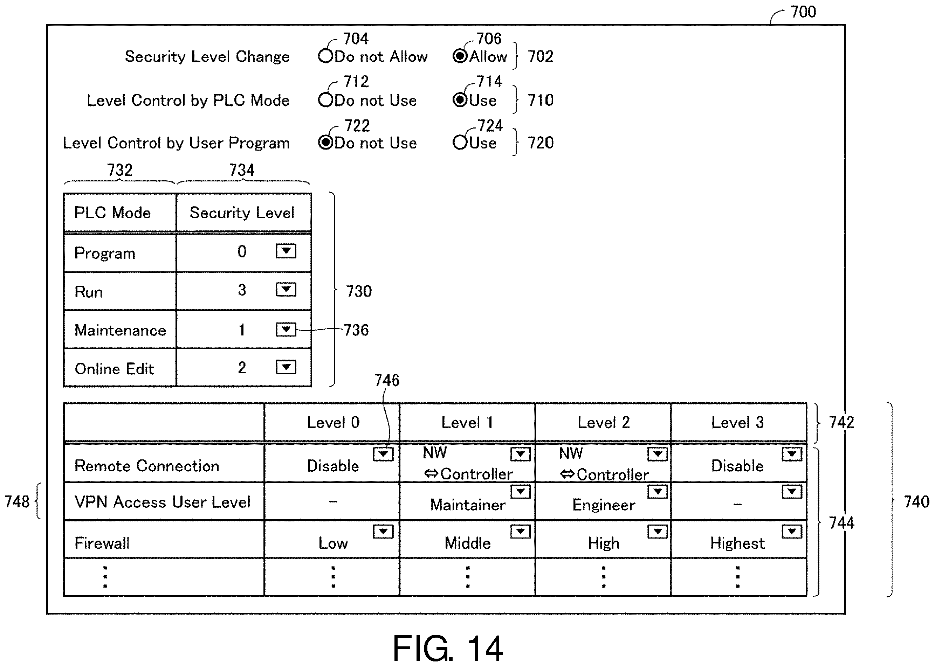

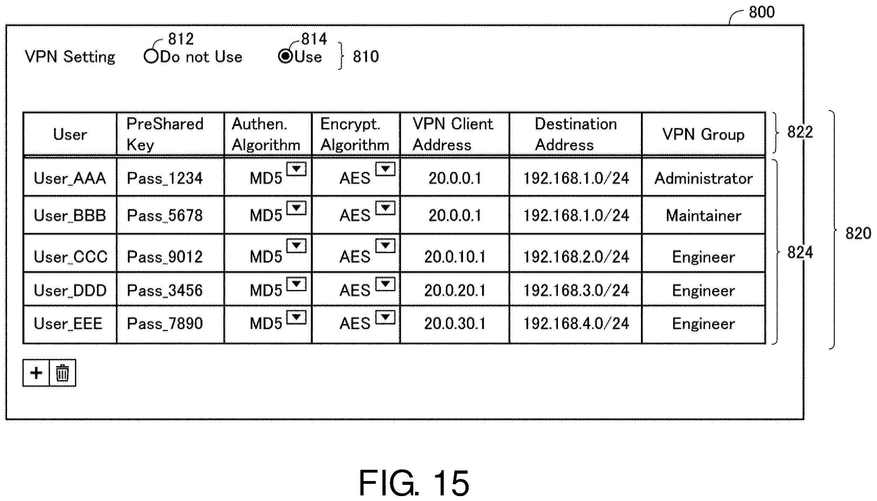

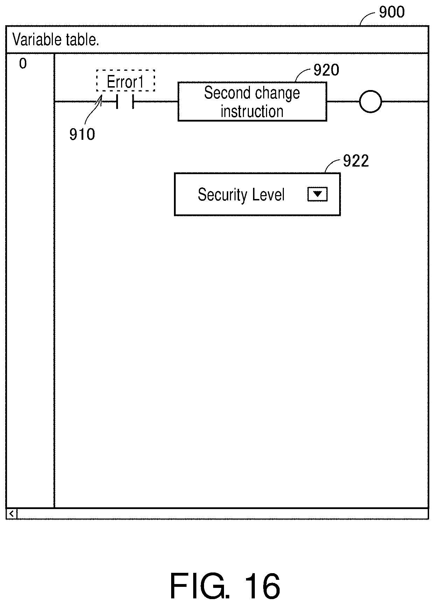

FIG. 13 is a diagram illustrating an example of a user interface receiving selection of a change instruction. FIG. 14 is a diagram illustrating an example of a user interface provided when a change instruction is selected. FIG. 15 is a diagram illustrating an example of a user interface for setting contents of a connection condition for connection with an outside network. FIG. 16 is a diagram illustrating an example of a user interface receiving setting of an execution condition of a change instruction.

Referring to FIG. 13, in a user interface 650, when a security setting tab 652 on the left side of in the figure is selected, a setting screen 700 is displayed in the region on the right side. The setting screen 700 has a selection region 702 for selecting the change instruction for receiving the selection of the change instruction. In the selection region 702, a tab 704 indicating that the change instruction is not selected and a tab 706 indicating that the change instruction is selected are displayed. In FIG. 13, a portion of the user interface 650 is omitted.

Referring to FIG. 14, when the tab 706 is selected, a first selection region 710 and a second selection region 720 for selecting the change instructions are provided for each of the two types of change instructions in the setting screen 700.

The first selection region 710 receives the selection of the first change instruction. The first change instruction is an instruction for determining the value of the output signal indicating the behavior of the security unit 200 carried out by executing the security protection process with respect to the input signal indicating the action state of the control unit 100. In the first selection region 710, a tab 712 indicating that the first change instruction is not selected and a tab 714 indicating that the first change instruction is selected are displayed.

The second selection region 720 receives the selection of the second change instruction. The second change instruction is an instruction that defines the behavior of the security unit 200 carried out by executing the security protection process. The second change instruction is executed when a condition arbitrarily set by the user is met. In the second selection region 720, a tab 722 indicating that the second change instruction is not selected and a tab 724 indicating that the second change instruction is selected are displayed.

Referring to FIG. 14, when the tab 714 is selected, a level corresponding region 730 for associating the action state of the control unit 100 with the security level is provided. The level corresponding region 730 includes a state displaying region 732 in which the action state of the control unit 100 is defined and a level input region 734 in which the input of the security level corresponding to the action state displayed in the action display region 732 is received. When the tab 736 of the level input region 734 is selected, one of multiple levels can be selected. It is also possible to add a level. Since the action state of the control unit 100 displayed in the state display region 732 is predetermined, the display of the state display region 732 in general does not change.

Since the contents of the security protection process are set in correspondence with each security level, the level corresponding region 730 can be considered as a region receiving the setting of the corresponding relationship between the input signal indicating the action state of the control unit 100 and the output signal indicating the behavior of the security unit 200 carried out by executing the security protection process.

Referring to FIG. 14, when the tab 714 is selected, in addition to the level corresponding region 730, a setting content corresponding region 740 for setting the contents of the security protection process for each security level is provided. The setting content corresponding region 740 includes a level region 742 indicating the security level and a setting content input region 744 receiving the setting of the contents of the security protection process for each level.

A tab 746 for selecting the setting contents is provided in each cell in the setting content input region 744. By selecting the tab 746, the user interface for selecting the setting contents is provided.

Since the setting content corresponding region 740 receives the setting of the contents of the security protection process for each security level equivalent to the output signal, the setting content corresponding region 740 is equivalent to the user interface for setting the behavior of the security unit 200 indicated by the output signal.

The setting content input region 744 includes a permitted condition input region 748 receiving the setting of the permitted condition in the case where the communication via the outside network is permitted. The contents of the specific permitted condition which each permitted condition ("Maintainer", "Administrator", "Engineer") in the permitted condition input region 748 are set by operating a permitted condition setting screen 800.

Referring to FIG. 15, the permitted condition setting screen 800 provides a condition change selection region 810 which receives the selection of the permitted condition change instruction for changing the permitted condition for each level and an permitted condition setting region 820 for setting the permitted condition in the case where the selection of the permitted condition change instruction is carried out.

The condition change selection region 810 includes a tab 812 indicating that the permitted condition change instruction is not selected and a tab 814 indicating that the permitted condition change instruction is selected. When the tab 814 is selected, the permitted condition setting region 820 is provided.

The permitted condition setting region 820 includes a condition item region 822 in which a condition item is presented and a condition input region 824 in which, for each user name, the input of each condition item is received. In "VPN Group", an arbitrary group name can be input. The group name is associated with the group name set in the permitted condition input region 748 shown in FIG. 14. For example, in the case where "Engineer" is input in the permitted condition input region 748, it is possible to connect with the control unit 100 via the VPN by using the respective conditions set as "User_CCC", "User_DDD", "User_EEE" in FIG. 15.

Referring to FIG. 16, when the tab 724 in FIG. 14 is selected, that is, when the second change instruction is selected, a variable table screen 900 as a user interface for setting the execution condition of the second change instruction is provided.

The variable table screen 900 receives the input of a ladder program. For example, the ladder program shown in FIG. 16 indicates that the execution condition of the second change instruction is met when a variable referred to as Error1 is output.

With the user inputting an arbitrary variable 910 or combining contact points, the execution condition of the second change instruction can be set.

In addition, in the case where an instance block 920 is clicked on, a level selection tab 922 for selecting of which security level the security protection process is to be executed is provided. In the case where the instant block 920 is clicked on, a variable table for inputting the instruction content of the second change instruction may be provided.

The user interface shown in FIGs. 13 to 16 is merely an example and may also be realized in a different form.

### <G. Software configuration of support apparatus 600>

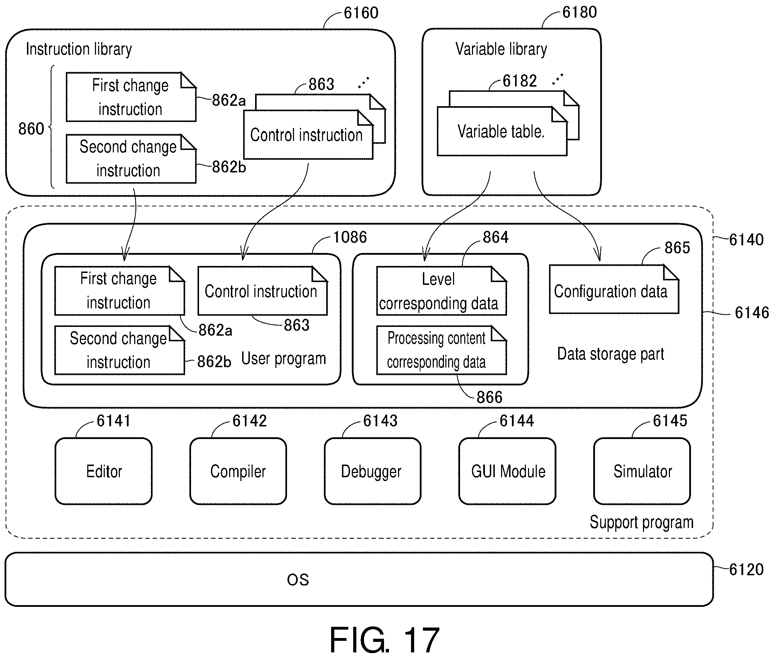

FIG. 17 is a schematic diagram illustrating a software configuration of the support apparatus 600. In FIG. 17, an example of a software group for the support apparatus 600 to provide respective functions is shown. The instruction codes included in the software group are read at a suitable timing and executed by the processor 602 of the support apparatus 600.

The software executed by the support apparatus 600 at least includes an OS 6120 and the support program 6140. The programs are stored in the storage 610. In addition, the data used for executing the programs include an instruction library 6160 and a variable library 6180 and are stored in the storage 610.

The OS6120 provides a basic environment in which the support program 6140 can be executed. The support program 6140 is a program for realizing the functions provided by the support apparatus 600, and provides a function for forming the user program 1086.

The instruction library 6160 stores instructions which are program components defined for each instruction information for forming the user program 1086. The instructions stored in the instruction library 6160 includes the change instruction 860 and the control instruction 863. The change instruction 860 includes a first change instruction 862a and a second change instruction 862b. When the user selects the first change instruction 862a, the first change instruction 862a is incorporated into the user program 1086. Similarly, when the user selects the second change instruction 862b, the second change instruction 862b is incorporated into the user program 1086.

The variable library 6180 includes a variable table 6182 defining parameters required for execution of the change instruction. In the case where the first change instruction 862a is selected, a variable table corresponding to the first change instruction 862a is called and input to the display part 608, and the level corresponding region 730 and the setting content corresponding region 740 shown in FIG. 14 are provided.

When information is input to the level corresponding region 730 and the setting content corresponding region 740, the support program 6140 generates the level corresponding data 864 and the processing content corresponding data 866 and stores the level corresponding data 864 and the processing content corresponding data 866 in the data storage part 6146. In the case where the control instruction 863 is selected, the variable table corresponding to the selected control instruction is called and output to the display part 608. When variables are input, the configuration data 865 is generated and stored in the data storage part 6146.

The instruction library 160 and the variable library 6180 are, for example, distributed in a state of being stored in the recording medium 614 by a controller manufacturer or a professional software company, etc. The user can make use of the instruction library 160 and the variable library 6180 by installing the instruction library 6160 and the variable library 6180 stored in the recording medium 614 to the support apparatus 600.

The user program 6140 includes an editor 6141, a compiler 6142, a debugger 6143, a graphical user interface (GUI) module 6144, a simulator 6145, and a data storage part 6146.

The editor 6141 provides inputting and editing functions, etc., for forming a source program of the user program 1086. More specifically, the editor 6141 provides functions of preserving and editing the formed source program in addition to the function that the user operates the input part 606 configured by a keyboard or a mouse to form the source program of the user program 1086. The editor 6141, in correspondence with the designer's operation, forms the source program of the user program 1086 by using the change instruction selected from the instruction library 6160.

The compiler 6142 provides functions of compiling the source program and generating the user program 1086 in the form of a program executable by the control unit 100.

The debugger 6143 provides a function for performing debugging with respect to the source program of the user program 1086.

The GUI module 6144 has a function of providing a user interface screen for the designer to input various data or parameters. The user interface screen is displayed on the display part 608.

The simulator 6145 constructs an environment for simulating the execution of the program by the control unit 100 in the support apparatus 600.

The user program 1086 that is formed is stored in the data storage part 6146. The user program 1086 includes one or more instructions. The user program 1086, the level corresponding data 864, the processing content corresponding data 866, and the configuration data 865, etc., stored in the data storage part 6146 are transmitted to the control unit 100 via a USB cable and set in the control unit 100.

While the instruction library 6160 and the variable library 6180 are stored in the storage 610 of the support apparatus 600 in the example shown in FIG. 17, at least one of the instruction library 6160 and the variable library 6180 may also be stored in a server apparatus connectible with the support apparatus 600 via a network.

### <H. Flowchart>

### <h1. Flowchart executed by control unit>

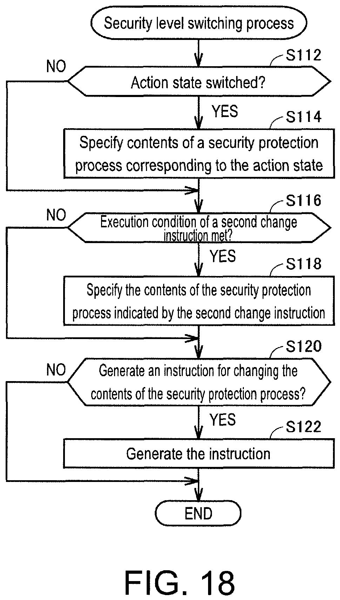

A security level switching process executed by the control unit 100 is described with reference to FIG. 18. FIG. 18 is a flowchart illustrating an example of the security level switching process executed by the control unit 100.

In Step S112, the processor 102 determines whether the action state of the control unit 100 is switched.

In the case of determining that the action state is not switched ("NO" in Step S112), the processor 102 switches the control to Step S116. In the case of determining that the action state is switched ("YES" in Step S112), the processor 102 specifies the security level corresponding to the action state in Step S114.

In Step S116, the processor 102 determines whether the execution condition of the second change instruction is met. That is, the processor 102 determines whether to perform a security level change in correspondence with a notification issued through the control arithmetic operation.

In the case where the execution condition of the second change instruction is not met ("NO" in Step S116), the processor 102 switches the process to Step S120. In the case where the execution condition of the second change instruction is met ("YES" in Step S116), the processor 102 specifies the contents of the security protection process indicated by the second change instruction.

In Step S120, the processor determines whether to generate the instruction for changing the contents of the security protection process. Specifically, if "NO" in both Step S112 and Step S116, the processor 102 determines to not generate the instruction ("NO" in Step S120) and ends the security level switching process.

In the case where the processor 102 determines to generate the instruction for changing the contents of the security protection process ("YES" in Step S120), in Step S122, the instruction for changing the contents of the security protection process is generated, and in Step S124, the security unit 200 is notified with the generated instruction, and the process is ended. In the case where the action state is switched and the execution condition of the second change instruction is also met, the processor 102 generates an instruction for changing the contents of the security protection process, so that the security becomes the highest.

In Step S122, the processor 102 may generate the instruction indicating the contents of the security protection process, or may also generate, as the instruction, the information for determining the contents of the security protection process.

### <h2. Flowchart executed by support apparatus>

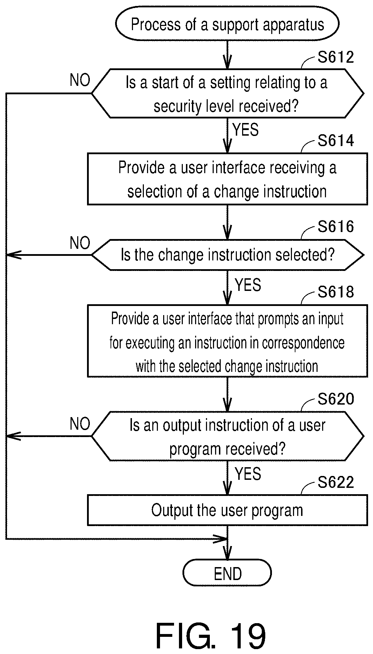

A flowchart for a process executed by the support apparatus is described with reference to FIG. 19. FIG. 19 is a flowchart illustrating an example of the process executed by the support apparatus 600.

In Step S612, the processor 602 determines whether a start of the setting relating to the security level is received. In the case where the start of the setting relating to the security level is not received ("NO" in Step S612), the processor 602 ends the process.

In the case where the start of the setting relating to the security level is received ("YES" in Step S612), in Step S614, the processor 602 provides a user interface for receiving the selection of the change instruction.

In Step S116, the processor 602 determines whether the change instruction is selected. In the case where the change instruction is not selected ("NO" in Step S616), the processor 602 ends the process.

In the case where the change instruction is selected ("YES" in Step S616), in Step S618, the processor 602 provides the user interface that prompts for the input for execution of the instruction in correspondence with the change instruction that is selected.

In Step S620, the processor 602 determines whether an output instruction of the user program is received. In the case where the output instruction is not received ("NO" in Step S620), the processor 602 ends the process.

In the case where the output instruction is received ("YES" in Step S620), the processor 602 outputs the user program including the change instruction in Step S622.

### <I. Modified Examples>

### (Modified example 1)

In the above embodiment, the contents of the security protection process are set in correspondence with multiple predetermined security levels. However, the contents of the security protection process may also be determined in accordance with one of the action state of the control unit 100 and the results of the control arithmetic operation. For example, the contents of the security protection process may also be defined for each of the action state and the results of the arithmetic operation without using an intermediate variable referred to as the security level. In addition, while the user interface provided by the support apparatus 600 uses the intermediate variable referred to as the security level, the contents of the security protection process can also be set for each action state and each second change instruction without using the intermediate variable.

### (Modified example 2)

In the above embodiment, the contents of the security protection process are determined in accordance with each of the action state and the results of the control arithmetic operation. However, the contents of the security protection process may also be determined in accordance with only the information of one of the action state and the results of the control arithmetic operation. In addition, as the user program 1086, an example in which the change instruction is provided is described. However, a program equivalent to the change instruction may also be provided in advance as a system program.

For example, the control unit 100 may also have a function that the contents of the security protection process can be changed in correspondence with the action state of the control unit 100 before the user forms and installs the user program 1086. In such case, the contents of the security protection process of each action state may be set in default, and may be configured as being changeable by the user.

### (Modified example 3)

The control unit 100 and the security unit 200 may also be configured integrally. In this case, the function of the control unit 100 may be realized by a CPU, and the function of the security unit 200 may be realized by another CPU. In addition, the control unit 100 and the security unit 200 may also be realized by using a multi-core CPU. For example, the function of the control unit 100 may be assigned to a core of the multi-core CPU, and the function of the security unit 200 may also be assigned to another core of the multi-core CPU.

It should be considered that the embodiments disclosed herein are exemplary in all respects and not restrictive. The scope of the invention is defined by the scope of claims, not the above description, and is intended to include all the modifications within the meaning and scope of the claims. Further, the invention described in the embodiments and the respective modifications are intended to be carried out alone or in combination, where possible.

### [Reference Signs List]

1, 1a: Controller system; 10a: Control system; 100: Control unit; 100a: Control apparatus; 102, 202, 302, 602: Processor; 102a: Program execution part; 104, 204, 304: Chipset; 106, 206, 306: Main storage apparatus; 108, 208, 308: Secondary storage apparatus; 110, 210: Communication controller; 110a: Communication interface; 114, 114a, 214, 314: Memory card interface; 115, 115a, 215, 315: Memory card; 122, 322: Internal bus controller; 124, 224, 324: Indicator; 142, 212, 620: USB controller; 142a, 144a, 146a, 148a, 242a: Communication port; 144, 146, 148, 242: Network controller; 200: Security unit; 200a: Security monitoring device; 300: Safety unit; 400: Function unit; 450: Power unit; 500, 500a: Field device; 600, 600a: Support apparatus; 602a: Forming/editing part; 604: Main memory; 606: Input part; 608: Display part; 610: Storage; 612: Optical drive; 614: Recording medium; 618: Processor bus; 620a: Output part; 844: Sequence instruction program; 848, 2081: Access process program; 650: User interface; 652: Security setting tab; 700: Setting screen; 702: Selection region; 704, 706, 712, 714, 722, 724, 736, 746, 812, 814: Tab; 710: First selection region; 720: Second selection region; 730: Level corresponding region; 732: State display region; 734: Level input region; 740: Setting content corresponding region; 742: Level region; 744: Setting content input region; 748: Permitted condition input region; 750, 750a: SCADA apparatus; 800: Permitted condition setting screen; 810: Condition change selection region; 820: Permitted condition setting region; 822: Condition item region; 824: Condition input region; 842: Scheduler program; 846: Input/output process program; 860, 860a: Change instruction; 862a: First change instruction; 862b: Second change instruction; 863: Control instruction; 864: Level corresponding data; 865: Configuration data; 866: Processing content corresponding data; 900: Variable table screen; 910: Variable; 920: Instance block; 922: Level selection tab; 950, 950a: Database; 1022: State management part; 1024: Control arithmetic operation part; 1026: Level determining part; 1028: Security planning part; 1084, 2084: System program; 1085: Control program; 1086, 1086a: User program; 2022: Execution part; 2083: Security protection program; 2085: Prevention program; 2087: Detection program; 2089: Coping program; 6140: Support program; 6141: Editor; 6142: Compiler; 6143: Debugger; 6144: Module; 6145: Simulator; 6146: Data storage part; 6160: Instruction library; 6180: Variable library; 6182: Variable table.

## Claims

1. A support apparatus (600, 600a), comprising:
a forming/editing part (602, 602a), which is adapted to provide a first user interface for forming or editing a user program (1086, 1086a) defining contents of a control arithmetic operation executed by a control apparatus (100, 100a) which executes a control arithmetic operation for controlling a control target; and
an output part (110a, 110) which is adapted to output the user program (1086, 1086a) formed via the first user interface (650) provided by the forming/editing part (602, 602a),
wherein in the step of providing the first user interface (650), as an instruction constituting the user program (1086, 1086a), the forming/editing part (602, 602a) is adapted to provide a second user interface which is adapted to receive a selection of a change instruction (860, 860a) for changing a behavior of a security monitoring device (200, 200a), said changing a behavior being carried out by executing a security protection process (2083) in correspondence with one of security levels in accordance with at least one of action states of the control apparatus (100, 100a) comprising a detection of a security event which is possible to occur in the control apparatus and comprising an execution of a process in correspondence with the security event,
wherein the support apparatus (600, 600a) is **characterized in that**
the second user interface is adapted to comprise a level corresponding region (730) for associating an action state of the control apparatus (100) with a respective security level, the level corresponding region (730) is adapted to comprise of a state displaying region (732) in which the action state of the control apparatus (100) is defined and a level input region (734) in which the security level corresponding to the respective action state is received.

2. The support apparatus (600, 600a) as claimed in claim 1, wherein the forming/editing part (602, 602a) is adapted to provide a third user interface (900) receiving setting of an execution condition of the change instruction (860, 860a).

3. The support apparatus (600, 600a) as claimed in claim 1 or 2, wherein the change instruction (860, 860a) is an instruction (862b) for determining a value of an output signal indicating the behavior of the security monitoring device (200, 200a) carried out by executing the security protection process (2083) with respect to an input signal indicating an action state of the control apparatus (100, 100a), and
the forming/editing part (602, 602a) is adapted to provide a fourth user interface receiving setting of a correspondence relationship between the input signal and the output signal.

4. The support apparatus (600, 600a) as claimed in any one of claims 1 to 3, wherein the forming/editing part (602, 602a) is adapted to provide a fifth user interface (740) for setting the behavior of the security monitoring device (200, 200a).

5. The support apparatus (600, 600a) as claimed in any one of claims 1 to 4, wherein the behavior of the security monitoring device (200, 200a) comprises setting of a connection condition for connecting the controller system (1, 1a) with an outside network, and
the forming/editing part (602, 602a) is adapted to provide a sixth user interface for setting contents of the connection condition.

6. An assistance program for assisting in development of a user program (1086, 1086a) executed by a computer which functions as a support apparatus (600, 600a),
the assistance program causes the computer to execute:
a step for providing a first user interface for forming or editing a user program (1086, 1086a) defining contents of a control arithmetic operation executed by a control apparatus (100, 100a) which is adapted to execute a control arithmetic operation for controlling a control target; and
a step for outputting the user program (1086, 1086a) formed via the first user
wherein in the step for providing the first user interface, as an instruction constituting the user program (1086, 1086a), providing a second user interface which is adapted to receive selection of a change instruction (860, 860a) for changing a behavior of a security monitoring device (200, 200a), said changing a behavior being carried out by executing a security protection process (2083) in correspondence with one of security levels in accordance with at least one of action states of the control apparatus (100, 100a) comprising a detection of a security event which is possible to occur in the control apparatus and comprising an execution of a process in correspondence with the security event,
wherein the assistance program is **characterized in that**
the second user interface is adapted to comprise a level corresponding region (730) for associating an action state of the control apparatus (100) with a respective security level, the level corresponding region (730) is adapted to comprise a state displaying region (732) in which the action state of the control apparatus (100) is defined and a level input region (734) in which the security level corresponding to the respective action state is received.

7. A control system (10a) comprising a controller system (1,1a), said controller system (1,1a) including a control apparatus (100,100a) and a security monitoring device (200,200a), wherein the control apparatus (100, 100a) is adapted to execute a control arithmetic operation for controlling a control target;
and the security monitoring device (200, 200a) is adapted to execute a security protection process (2083) comprising a detection of a security event which is possible to occur in the controller system (1, 1a) and comprising an execution of a process in correspondence with the security event as an instruction constituting a user program (1086, 1086a); and
the support apparatus (600, 600a) according to any of claims 1 to 5.

## Patentansprüche

1. Unterstützungsvorrichtung (600, 600a), die umfasst:
ein Formungs-/Bearbeitungsteil (602, 602a), das angepasst ist, um eine erste Benutzerschnittstelle zum Formen oder Bearbeiten eines Benutzerprogramms (1086, 1086a) bereitzustellen, das Inhalte einer arithmetischen Steueroperation definiert, die von einer Steuervorrichtung (100, 100a) ausgeführt wird, die eine arithmetische Steueroperation zum Steuern eines Steuerziels ausführt; und
ein Ausgabeteil (110a, 110), das angepasst ist, um das Benutzerprogramm (1086, 1086a) auszugeben, das über die erste Benutzerschnittstelle (650), die durch das Formungs-/Bearbeitungsteil (602, 602a) bereitgestellt wird, gebildet wird,
wobei in dem Schritt des Bereitstellens der ersten Benutzerschnittstelle (650) als eine Anweisung, die das Benutzerprogramm (1086, 1086a) bildet, der Formungs-/Bearbeitungsteil (602, 602a) angepasst ist, um eine zweite Benutzerschnittstelle bereitzustellen, die angepasst ist, um eine Auswahl einer Änderungsanweisung (860, 860a) zum Ändern eines Verhaltens eines Sicherheitsüberwachungsgeräts (200, 200a) zu empfangen, wobei Ändern eines Verhaltens, das durchgeführt wird durch Ausführen eines Sicherheitsschutzprozesses (2083) in Übereinstimmung mit einer von Sicherheitsstufen in Übereinstimmung mit mindestens einem von Aktionszuständen der Steuervorrichtung (100, 100a), umfassend eine Erfassung eines Sicherheitsereignisses, das in der Steuervorrichtung auftreten kann, und umfassend eine Ausführung eines Prozesses in Übereinstimmung mit dem Sicherheitsereignis,
wobei die Unterstützungsvorrichtung (600, 600a) **dadurch gekennzeichnet ist, dass** die zweite Benutzerschnittstelle angepasst ist, um einen Bereich (730) mit entsprechender Ebene zu umfassen, um einen Aktionszustand der Steuervorrichtung (100) mit einer entsprechenden Sicherheitsebene zu verknüpfen, wobei der Bereich ( 730) angepasst ist, um einen Zustandsanzeigebereich (732) zu umfassen, in dem der Aktionszustand der Steuervorrichtung (100) definiert ist, und einen Sicherheitsstufen-Eingabebereich (734), in dem die dem jeweiligen Aktionszustand entsprechende Sicherheitsstufe empfangen wird.

2. Unterstützungsvorrichtung (600, 600a) gemäß Anspruch 1, wobei der Formungs-/Bearbeitungsteil (602, 602a) angepasst ist, um eine dritte Benutzerschnittstelle (900) bereitzustellen, die eine Einstellung einer Ausführungsbedingung der Änderungsanweisung (860, 860a) empfängt.

3. Unterstützungsvorrichtung (600, 600a) gemäß Anspruch 1 oder 2, wobei die Änderungsanweisung (860, 860a) eine Anweisung (862b) zum Bestimmen eines Wertes eines Ausgangssignals ist, das das Verhaltens des Sicherheitsüberwachungsgeräts (200, 200a) ist, das durch Ausführen des Sicherheitsschutzprozesses (2083) in Bezug auf ein Eingangssignal durchgeführt wird, das einen Aktionszustand der Steuervorrichtung (100, 100a) anzeigt, und
der Formungs-/Bearbeitungsteil (602, 602a) angepasst ist, um eine vierte Benutzerschnittstelle bereitzustellen, die eine Einstellung einer Korrespondenzbeziehung zwischen dem Eingangssignal und dem Ausgangssignal empfängt.

4. Unterstützungsvorrichtung (600, 600a) gemäß einem der Ansprüche 1 bis 3, wobei der Formungs-/Bearbeitungsteil (602, 602a) angepasst ist, um eine fünfte Benutzerschnittstelle (740) zum Einstellen des Verhaltens des Sicherheitsüberwachungsgeräts (200, 200a) bereitzustellen.

5. Unterstützungsvorrichtung (600, 600a) gemäß einem der Ansprüche 1 bis 4, wobei das Verhalten des Sicherheitsüberwachungsgeräts (200, 200a) Einstellen einer Verbindungsbedingung zum Verbinden des Steuerungssystems (1, 1a) mit einem externen Netzwerk umfasst und
der Formungs-/Bearbeitungsteil (602, 602a) angepasst ist, um eine sechste Benutzerschnittstelle zum Einstellen von Inhalten der Verbindungsbedingung bereitzustellen.

6. Hilfsprogramm zur Unterstützung bei der Entwicklung eines Benutzerprogramms (1086, 1086a), das von einem Computer durchgeführt wird, der als eine Unterstützungsvorrichtung (600, 600a) fungiert,
wobei das Hilfsprogramm den Computer veranlasst, durchzuführen:
einen Schritt zum Bereitstellen einer ersten Benutzerschnittstelle zum Formen oder Bearbeiten eines Benutzerprogramms (1086, 1086a), das Inhalte einer arithmetischen Steuerungsoperation definiert, die von einer Steuerungsvorrichtung (100, 100a) durchgeführt wird, die angepasst ist, um eine arithmetische Steuerungsoperation zum Steuern eines Steuerungsziels auszuführen; und
einen Schritt zum Ausgeben des Benutzerprogramms (1086, 1086a), das über die erste Benutzerschnittstelle (650) gebildet wird,
wobei in dem Schritt zum Bereitstellen der ersten Benutzerschnittstelle als eine Anweisung, die das Benutzerprogramm (1086, 1086a) bildet, eine zweite Benutzerschnittstelle bereitgestellt wird, die angepasst ist, um eine Auswahl einer Änderungsanweisung (860, 860a) zum Ändern eines Verhaltens eines Sicherheitsüberwachungsgeräts (200, 200a) zu empfangen, wobei Ändern eines Verhaltens, das durch Durchführen eines Sicherheitsschutzprozesses (2083) in Korrespondenz mit einer von Sicherheitsstufen in Verbindung mit mindestens einem von Aktionszuständen der Steuervorrichtung (100, 100a) ausgeführt wird, umfassend ein Erfassen eines Sicherheitsereignisses, das in der Steuervorrichtung auftreten kann, und umfassend ein Durchführen eines Prozesses in Verbindung mit dem Sicherheitsereignis,
wobei das Hilfsprogramm **dadurch gekennzeichnet ist, dass**
die zweite Benutzerschnittstelle angepasst ist, um einen Bereich (730) mit entsprechender Ebene zu umfassen, um einen Aktionszustand der Steuervorrichtung (100) mit einer entsprechenden Sicherheitsebene zu verknüpfen, wobei der Bereich ( 730) mit entsprechender Ebene angepasst ist, um einen Zustandsanzeigebereich (732), in dem der Aktionszustand der Steuervorrichtung (100) definiert ist, und einen Sicherheitsstufen-Eingabebereich (734) zu umfassen, in dem die dem jeweiligen Aktionszustand entsprechende Sicherheitsstufe empfangen wird.

7. Steuersystem (10a), umfassend ein Steuersystem (1, 1a), wobei das Steuersystem (1, 1a) eine Steuervorrichtung (100, 100a) und ein Sicherheitsüberwachungsgerät (200, 200a) enthält, wobei die Steuervorrichtung (100, 100a) angepasst ist, um eine arithmetische Steueroperation zum Steuern eines Steuerziels auszuführen;
und das Sicherheitsüberwachungsgerät (200, 200a) angepasst ist, um einen Sicherheitsschutzprozess (2083) durchzuführen, das eine Erfassung eines Sicherheitsereignis, das möglich ist, in dem Steuersystem (1, 1a) aufzutreten und umfassend eine Durchführung eines Prozesses in Verbindung mit dem Sicherheitsereignis als eine Anweisung, die das Benutzerprogramm (1086, 1086a) bildet; und
die Unterstützungsvorrichtung (600, 600a) gemäß einem der Ansprüche 1 bis 5.

## Revendications

1. Appareil de prise en charge (600, 600a), comprenant :
une partie de formation/édition (602, 602a), qui est adaptée pour fournir une première interface utilisateur pour former ou éditer un programme utilisateur (1086, 1086a) définissant un contenu d'une opération arithmétique de commande exécutée par un appareil de commande (100, 100a) qui exécute une opération arithmétique de commande pour commander une cible de commande ; et
une partie de sortie (110a, 110) qui est adaptée pour délivrer le programme utilisateur (1086, 1086a) formé via la première interface utilisateur (650) fournie par la partie de formation/édition (602, 602a),
dans lequel, à l'étape de fourniture de la première interface utilisateur (650), en tant qu'une instruction constituant le programme utilisateur (1086, 1086a), la partie de formation/édition (602, 602a) est adaptée pour fournir une deuxième interface utilisateur qui est adaptée pour recevoir une sélection d'une instruction de changement (860, 860a) pour changer un comportement d'un dispositif de surveillance de sécurité (200, 200a), ledit changement de comportement étant réalisé par l'exécution d'un processus de protection de sécurité (2083) en correspondance avec l'un de niveaux de sécurité en fonction d'au moins l'un d'états d'action de l'appareil de commande (100, 100a) comprenant une détection d'un événement de sécurité dont la survenance est possible dans l'appareil de commande et comprenant une exécution d'un processus en correspondance avec l'événement de sécurité,
dans lequel l'appareil de support (600, 600a) est **caractérisé en ce que**
la deuxième interface utilisateur est adaptée pour comprendre une région de correspondance de niveau (730) pour associer un état d'action de l'appareil de commande (100) à un niveau de sécurité respectif, la région de correspondance de niveau (730) est adaptée pour comprendre une région d'affichage d'état (732) dans laquelle l'état d'action de l'appareil de commande (100) est définie et une région d'entrée de niveau (734) dans laquelle le niveau de sécurité correspondant à l'état d'action respectif est reçu.

2. Appareil de prise en charge (600, 600a) selon la revendication 1, dans lequel la partie de formation/édition (602, 602a) est adaptée pour fournir une troisième interface utilisateur (900) recevant la définition d'une condition d'exécution de l'instruction de changement (860, 860a).

3. Appareil de prise en charge (600, 600a) selon la revendication 1 ou 2, dans lequel l'instruction de changement (860, 860a) est une instruction (862b) pour déterminer une valeur d'un signal de sortie indiquant le comportement du dispositif de surveillance de sécurité (200, 200a) réalisée par l'exécution du processus de protection de sécurité (2083) en ce qui concerne un signal d'entrée indiquant un état d'action de l'appareil de commande (100, 100a), et
la partie de formation/édition (602, 602a) est adaptée pour fournir une quatrième interface utilisateur recevant une définition d'une relation de correspondance entre le signal d'entrée et le signal de sortie.

4. Appareil de prise en charge (600, 600a) selon l'une quelconque des revendications 1 à 3, dans lequel la partie de formation/édition (602, 602a) est adaptée pour fournir une cinquième interface utilisateur (740) pour définir le comportement du dispositif de surveillance de sécurité (200, 200a).

5. Appareil de prise en charge (600, 600a) selon l'une quelconque des revendications 1 à 4, dans lequel le comportement du dispositif de surveillance de sécurité (200, 200a) comprend la définition d'une condition de connexion pour connecter le système de dispositif de commande (1, 1a) à un réseau extérieur, et
la partie de formation/édition (602, 602a) est adaptée pour fournir une sixième interface utilisateur pour définir un contenu de la condition de connexion.

6. Programme d'assistance pour l'assistance au développement d'un programme utilisateur (1086, 1086a) exécuté par un ordinateur qui fonctionne en tant qu'un appareil de prise en charge (600, 600a),
le programme d'assistance amène l'ordinateur à exécuter :
une étape de fourniture d'une première interface utilisateur pour former ou éditer un programme utilisateur (1086, 1086a) définissant un contenu d'une opération arithmétique de commande exécutée par un appareil de commande (100, 100a) qui est adapté pour exécuter une opération arithmétique de commande pour commander une cible de commande ; et
une étape de sortie du programme utilisateur (1086, 1086a) formé via la première interface utilisateur (650),
dans lequel, à l'étape de fourniture de la première interface utilisateur, en tant qu'une instruction constituant le programme utilisateur (1086, 1086a), la fourniture d'une deuxième interface utilisateur qui est adaptée pour recevoir une sélection d'une instruction de changement (860, 860a) pour changer un comportement d'un dispositif de surveillance de sécurité (200, 200a), ledit changement de comportement étant réalisé par l'exécution d'un processus de protection de sécurité (2083) en correspondance avec l'un de niveaux de sécurité en fonction d'au moins l'un d'états d'action de l'appareil de commande (100, 100a) comprenant une détection d'un événement de sécurité dont la survenance est possible dans l'appareil de commande et comprenant une exécution d'un processus en correspondance avec l'événement de sécurité,
dans lequel le programme d'assistance est **caractérisé en ce que**
la deuxième interface utilisateur est adaptée pour comprendre une région de correspondance de niveau (730) pour associer un état d'action de l'appareil de commande (100) à un niveau de sécurité respectif, la région de correspondance de niveau (730) est adaptée pour comprendre une région d'affichage d'état (732) dans laquelle l'action d'état de l'appareil de commande (100) est définie et une région d'entrée de niveau (734) dans laquelle le niveau de sécurité correspondant à l'état d'action respectif est reçu.

7. Système de commande (10a) comprenant un système de dispositif de commande (1, 1a), ledit système de dispositif de commande (1, 1a) comprenant un appareil de commande (100, 100a) et un dispositif de surveillance de sécurité (200, 200a), dans lequel l'appareil de commande (100, 100a) est adapté pour exécuter une opération arithmétique de commande pour commander une cible de commande ;
et le dispositif de surveillance de sécurité (200, 200a) est adapté pour exécuter un processus de protection de sécurité (2083) comprenant une détection d'un événement de sécurité dont la survenance est possible dans le système de dispositif de commande (1, 1a) et comprenant une exécution d'un processus en correspondance avec l'événement de sécurité en tant qu'instruction constituant un programme utilisateur (1086, 1086a) ; et
l'appareil de prise en charge (600, 600a) selon l'une quelconque des revendications 1 à 5.
